# EUROPÄISCHE PATENTSCHRIFT

(11) **EP 0 597 175 B1**
(45) Veröffentlichungstag und Bekanntmachung des Hinweises auf die Patenterteilung: **10.04.1996**
(21) Anmeldenummer: 93107431.4
(22) Anmeldetag: 07.05.1993
(51) Int. Cl.: B60K 15/077, F04F 5/46, F04F 5/50, F02M 37/02

(54) **Saugstrahlpumpe zum Fördern von Kraftstoff**
Jet pump for feeding fuel
Pompe à jet d'alimentation en carburant

(30) Priorität: 11.11.1992 DE 4238040
(43) Veröffentlichungstag der Anmeldung: 18.05.1994
(73) Patentinhaber: VDO Adolf Schindling AG, D-60487 Frankfurt (DE)
(72) Erfinder: Werkmann, Karl-Heinz, W-6457 Maintal 1 (DE)
(74) Vertreter: Klein, Thomas, Dipl.-Ing. (FH)

(56) Entgegenhaltungen:
- DE-A- 2 440 905
- DE-A- 2 442 152
- DE-C- 3 915 185
- FR-A- 2 636 017

## Beschreibung

Die Erfindung betrifft eine Saugstrahlpumpe zum Fördern von Kraftstoff aus einer Tankkammer in eine andere Tankkammer eines Kraftstofftanks, welche einen Treibmitteleinlaß, einen Ansaugkanal an seiner Unterseite und einen mit einer zur anderen Tankkammer führenden Leitung verbundenen Kraftstoffauslaß aufweist.

Kraftstofftanks heutiger Personenkraftwagen weisen oftmals Tankkammern auf, welche nicht an der jeweils tiefsten Stelle miteinander verbunden werden können. In solchen Fällen fördert man den Kraftstoff aus einer Tankkammer ohne Kraftstoffpumpe mittels einer Saugstrahlpumpe in die Tankkammer mit der Kraftstoffpumpe. Als Treibmittel für die Saugstrahlpumpe verwendet man den vom Motor zurücklaufenden Kraftstoff.

Bei Saugstrahlpumpen dieser Art (FR-A-26 36 017) läßt es sich nicht vermeiden, daß die Treibmittelmenge zu gering ist, um Kraftstoff aus der einen Tankkammer über den diese von der anderen trennenden Bereich in die andere Tankkammer zu fördern. Kraftstoff in der von der Saugstrahlpumpe zur anderen Tankkammer führenden Leitung fließt dann in ihr zurück und gelangt über die Ansaugöffnung in die Tankkammer mit der Saugstrahlpumpe. Die Leitung ist dann nicht mehr mit Kraftstoff gefüllt. Bei ungünstigen Bedingungen infolge hoher Temperatur, kann es vorkommen, daß anschließend auch bei hohem Treibmitteldruck kein Kraftstoff mehr über die Ansaugöffnung angesaugt werden kann und die Saugstrahlpumpe dadurch funktionsunfähig ist.

Aus der DE-C-39 27 687 ist eine Saugstrahlpumpe zum Fördern von Kraftstoff aus einem Kraftstofftank in einen Stautopf bekannt. Dabei fördert die Saugstrahlpumpe über ihren Kraftstoffauslaß direkt in den unteren Bereich des Stautopfes. Um bei nichtarbeitender Saugstrahlpumpe ein Auslaufen des Stautopfes über die Saugstrahlpumpe und deren Ansaugkanal in den Kraftstofftank zu vermeiden, ist im Ansaugkanal ein entgegen der Ansaugrichtung schließendes Rückschlagventil angeordnet.

Der Erfindung liegt das Problem zugrunde, eine Saugstrahlpumpe der eingangs genannten Art so auszubilden, daß sie auch unter ungünstigen Bedingungen zuverlässig Kraftstoff zu fördern vermag.

Dieses Problem wird erfindungsgemäß dadurch gelöst, daß im Ansaugkanal ein diesen entgegen der Förderrichtung verschließendes Einwegeventil mit einem gegen einen Ventilsitz bewegbaren, als Schwimmer ausgebildeten Ventilkörper angeordnet ist, welcher bei nicht arbeitender Saugstrahlpumpe aufgrund seines seinen Auftrieb geringfügig übersteigenden Gewichtes gegen den Ventilsitz anliegt.

Durch diese sehr einfache, und gegenüber üblichen Saugstrahlpumpen nur einen geringen Mehraufwand bedingende Gestaltung wird erreicht, daß die von der Tankkammer mit der Saugstrahlpumpe zur anderen Tankkammer führende Leitung nicht leerlaufen kann. Dadurch ist auch nach einem Stillstand der Saugstrahlpumpe und damit Ausbleiben des Treibstrahls oder nach einer Betriebsphase mit sehr geringem Treibstrahldruck bzw. Treibmenge sichergestellt, daß die Saugstrahlpumpe wieder normal fördern kann, sobald der Treibstrahldruck bzw. die Treibmenge ausreichend ist.

Die Erfindung läßt zahlreiche Ausführungsformen zu. Zwei davon sind in der Zeichnung dargestellt und werden nachfolgend beschrieben. In ihr zeigen die
- Fig.1: einen schematischen Schnitt durch einen Kraftstofftank mit der erfindungsgemäßen Saugstrahlpumpe,
- Fig.2: einen Längsschnitt durch eine erste Ausführungsform der Saugstrahlpumpe,
- Fig.3: einen Längsschnitt durch eine zweite Ausführungsform der Saugstrahlpumpe.

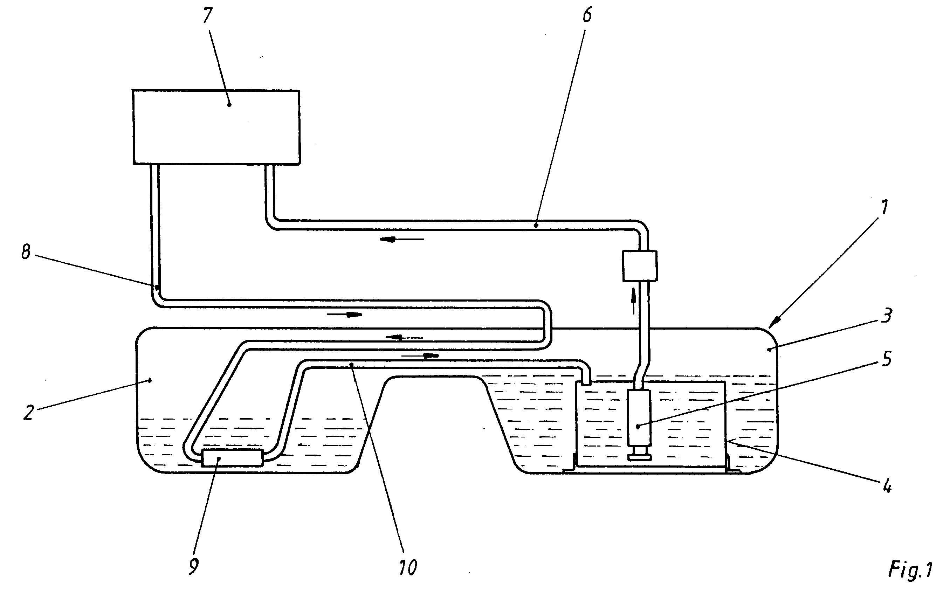

Die Figur 1 zeigt einen Kraftstofftank 1, welcher aus zwei Tankkammern 2, 3 besteht. In der Tankkammer 3 ist innerhalb eines Schwalltopfes 4 eine Kraftstoffpumpe 5 angeordnet. Die Kraftstoffpumpe 5 fördert über eine Vorlaufleitung 6 Kraftstoff zu einem Motor 7. Die in Abhängigkeit vom Leistungsbedarf des Motors 7 unterschiedliche, nicht benötigte Kraftstoffmenge strömt über eine als Treibmittelleitung 8 dienende Rücklaufleitung zu einer Saugstrahlpumpe 9 in der Tankkammer 2. Dadurch wird in ihr Kraftstoff angesaugt und über eine Leitung 10 zur Tankkammer 3 gefördert.

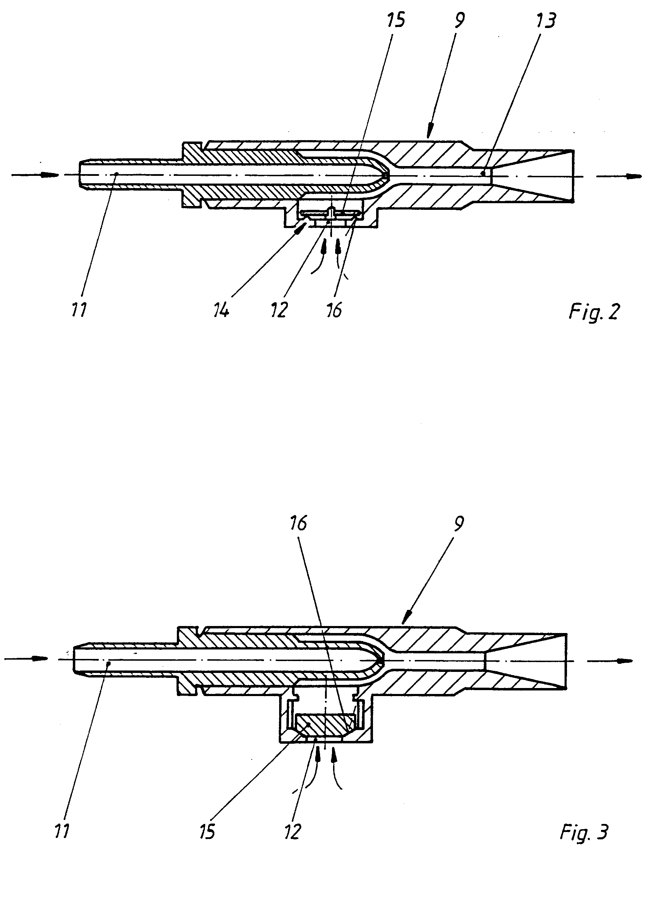

Wichtig für die Erfindung ist die Gestaltung der Saugstrahlpumpe 9, welche sich aus den Figuren 2 und 3 ergibt.

Die Figur 2 zeigt, daß die Saugstrahlpumpe 9 einen Treibmitteleinlaß 11 hat, welcher mit der Treibmittelleitung 8 zu verbinden ist. Weiterhin weist sie einen Ansaugkanal 12 auf, über welchen aus der in Figur 1 gezeigten Tankkammer 2 Kraftstoff angesaugt wird. Dieser angesaugte Kraftstoff verläßt die Saugstrahlpumpe 9 über einen Kraftstoffauslaß 13 und gelangt über die Leitung 10 in die Tankkammer 3.

Im Ansaugkanal 12 ist ein Einwegeventil 14 angeordnet, welches ein als Auftriebskörper ausgebildeten Ventilkörper 15 hat, der auf einem Ventilsitz 16 aufsitzt. Bei der in Figur 2 gezeigten Ausführungsform ist der Ventilkörper 15 als Ventilplatte ausgeführt.

Wenn die Saugstrahlpumpe 9 mit ausreichendem Treibmitteldruck bzw. Treibmenge arbeitet, dann hebt der Ventilkörper 15 vom Ventilsitz 16 ab, so daß Kraftstoff über den Ansaugkanal 12 angesaugt werden kann. Ist der Treibmitteldruck bzw. die Treibmenge zu gering, um Kraftstoff über die in Figur 1 gezeigte Leitung 10 zur Tankkammer 3 fördern zu können, dann gelangt der Ventilkörper 15 aufgrund des geringen oder fehlenden Unterdruckes wieder auf den Ventilsitz 16, so daß die Leitung 10 nicht leerlaufen kann.

Die Ausführungsform der Saugstrahlpumpe nach Figur 2 unterscheidet sich von der zuvor beschriebenen lediglich dadurch, daß der Ventilkörper 15 ein Schwimmer ist. Sein Gewicht ist im Verhältnis zu seinem Volumen so gewählt, daß er bei nicht ausreichender Ansaugleistung der Saugstrahlpumpe 9 auf dem Ventilsitz 16 aufliegt und dadurch den Ansaugkanal 12 verschließt.

## Patentansprüche

1. Saugstrahlpumpe zum Fördern von Kraftstoff aus einer Tankkammer in eine andere Tankkammer eines Kraftstofftanks, welche einen Treibmitteleinlaß, einen Ansaugkanal an seiner Unterseite und einen mit einer zur anderen Tankkammer führenden Leitung verbundenen Kraftstoffauslaß aufweist, dadurch gekennzeichent, daß im Ansaugkanal (12) ein diesen entgegen der Födereinrichtung verschließendes Einwegeventil (14) mit einem gegen einen Ventilsitz (16) bewegbaren, als Schwimmer ausgebildeten Ventilkörper (15) angeordnet ist, welcher bei nicht arbeitender Saugstrahlpumpe (9) aufgrund seines seinen Auftrieb geringfügig übersteigenden Gewichtes gegen den Ventilsitz (16) anliegt.

## Claims

1. Suction jet pump for the delivery of fuel from one tank chamber into another tank chamber of a fuel tank, having a propellant inlet, a suction input duct at its underside, and a fuel outlet connected to a conduit leading to the other tank chamber, characterised in that a one way valve (14) is arranged in the suction input duct (12) closing the latter in the direction opposite to the delivery direction and having a valve member (15) that is movable against a valve seat (16) and is formed as a float which when the suction jet pump (9) is not operating lies against the valve seat (16) because of its weight that slightly exceeds its buoyancy.

## Revendications

1. Pompe à jet aspirant pour faire passer du carburant, depuis une chambre d'un réservoir, dans une autre chambre de ce réservoir à carburant, présentant une entrée du fluide moteur, un canal d'aspiration sur sa face inférieure et une sortie du carburant reliée à une conduite conduisant à l'autre chambre du réservoir, caractérisée par le fait que, dans le canal d'aspiration (12), est disposé un robinet à soupape monovoie (14) qui obture ce canal dans le sens opposé au sens du passage et comporte une soupape (15) qui peut se déplacer contre un siège de soupape (16), est conçue sous forme de flotteur et, lorsque la pompe à jet aspirant (9) ne travaille pas, s'applique contre le siège de soupape (16) du fait que son poids dépasse légèrement sa poussée ascendante.
